# EUROPEAN PATENT APPLICATION

(11) **EP 4 246 639 A2**
(43) Date of publication of application: **20.09.2023**
(21) Application number: 23190419.4
(22) Date of filing: 25.01.2019
(51) Int. Cl.: H01M 10/052

(54) **SOLID ELECTROLYTE MATERIAL SYNTHESIS METHOD**

(62) Divisional of application: 19911439.8
(71) Applicant: Solid Power, Inc., Louisville, Colorado 80027 (US)
(72) Inventor: PLATT, Heather A. S., Golden, 80401 (US); FRANCISCO, Brian E., Superior, 80027 (US); CARLSON, Benjamin A., Boulder, 80302 (US); BUETTNER-GARRETT, Joshua, Arvada, 80003 (US)
(74) Representative: DehnsGermany Partnerschaft von Patentanwälten

(57) **Abstract**

A solid electrolyte material may be advantageously synthesized using a multipart solvent/solution based method employing selective solvation and/or particle size reduction for different reactants used to form the solid electrolyte.

## Description

### GOVERNMENT RIGHTS

This invention was made with government support under Department of Energy Contract Number DE-SC0013236. The government has certain rights in the invention.

### FIELD

Various embodiments described herein relate to the field of solid-state primary and secondary electrochemical cells, electrolyte and electrolyte compositions and corresponding methods of making and using same.

### BACKGROUND OF THE INVENTION

The ever-increasing number and diversity of mobile devices, the evolution of hybrid/electric automobiles, and the development of Internet-of-Things devices is driving greater need for battery technologies with improved reliability, capacity (mAh), thermal characteristics, lifetime and recharge performance. Currently, although lithium solid-state battery technologies provide improvement in safety, packaging efficiency, and enable new high-energy chemistries, further improvements are needed. Specifically, work is ongoing to improve the production capability and performance properties of solid electrolyte compositions. As the number and diversity of applications for solid state batteries increases, scalable production processes are required to meet this demand.

Solution methods are often readily scalable to production volumes, and as a result are commonly chosen methods for producing a wide range of materials. Regarding solid state electrolytes, lithium-containing sulfide solid electrolytes suitable for use in lithium solid state batteries have been prepared using solution methods. For example, mixing processes reacting Li₂S and P₂S₅ in a polar, aprotic solvent have been used to form sulfide solid electrolytes. Additionally, previous processes have indicated that different solvents can change the particle size and crystalline phase of the electrolyte produced. Sulfide electrolytes produced by existing methods include the Li₃PS₄ and Li₇P₃S₁₁ phases, and their room temperature ionic conductivities are a modest 0.12 - 0.27 mS/cm.

Other existing methods may combine milling processes with solution methods. The addition of a pulverization step prior to a mixing step may reduce time during the solution process step but does not shorten overall process times as the added step simply shifts time from the solution step to the milling step. Milling media may be added to a mixing step to encourage pulverization of the solid reactants and may decrease the reaction time, but this combination requires additional energy input and more expensive equipment.

### SUMMARY

One embodiment disclosed herein is a method for producing a sulfide solid electrolyte material comprising the steps of: combining an alkali metal salt and a sulfide compound containing at least one of P, B, Al, As, Sb, Bi, Si, Ge, and Sn with a polar aprotic solvent to form a first solution; combining an alkali metal salt and a polar protonated solvent to form a second solution; combining the first and second solutions to form a third solution; and drying the third solution to produce a sulfide solid electrolyte material.

In another embodiment, a solid electrolyte material may be advantageously synthesized using a multipart solution based method for different reactants used to form the solid electrolyte. Additionally the methods described herein are readily scalable for commercial production of solid-state electrochemical cells.

### BRIEF DESCRIPTION OF DRAWINGS

The present disclosure may be understood by reference to the following detailed description taken in conjunction with the drawings briefly described below. It is noted that, for purposes of illustrative clarity, certain elements in the drawings may not be drawn to scale.
FIG. 1 is a flow chart of a process for producing a solid electrolyte composition, according to the principles of the disclosure.
FIG. 2 is a plot of X-ray diffraction measurements of solid electrolyte compositions produced by the process indicated in FIG. 1, according to the principles of the disclosure.
FIG. 3 is a schematic sectional view of an example construction of a lithium solid-state electrochemical cell including a solid electrode composition, according to the principles of the disclosure.

### DETAILED DESCRIPTION OF ILLUSTRATED EMBODIMENTS

In the following description, specific details are provided to impart a thorough understanding of the various embodiments of the invention. Upon having read and understood the specification, claims and drawings hereof, however, those skilled in the art will understand that some embodiments of the invention may be practiced without hewing to some of the specific details set forth herein. Moreover, to avoid obscuring the invention, some well-known methods, processes, devices, and systems finding application in the various embodiments described herein are not disclosed in detail.

Disadvantageously, existing methods may require multi-day mixing time, are generally not scalable, and may result in low performing electrolytes. Therefore faster mixing processes that leverage the versatility of different solvents to more rapidly produce scalable production volumes of electrolytes with improved performance properties, such as higher ionic conductivity, are needed. Existing methods for manufacturing solid electrolytes often utilize energy-intensive milling type processes, long reaction time and/or highly elevated temperatures to reduce the particle size of solid electrolyte precursor compounds, such as Li₂S, enough to complete the formation of the solid electrolyte phase. These processing conditions inhibit the commercial viability of certain solid electrolyte formulations and may contribute to variability of resultant performance of the electrolyte ionic conductivity and other metrics.

Described herein are novel soft chemical processes relying upon synthesis methods using multipart solvent/solution based approaches employing selective solvation and/or particle size reduction for different reactants used to form the solid electrolytes. In place of extensive milling or very long preparation time, the described methods may use simple stirring over short time periods at ambient temperature. The short time periods are possible because a solution is formed at each step of the process in contrast to typical synthesis routes that involve reactions of one or more precursors suspended in solvent. In general, ratios of certain reactants may be combined with an appropriate templating solvent to prepare the structural backbone of the desired solid electrolyte phase. Other reactants may be mixed with a second solvent to produce sub-micron species that can react rapidly with the structural backbone components. These two solutions require a very short stirring time to produce two homogenous solutions that may be mixed and stirred again to form a final homogenous mixture of the solid electrolyte solution. The solvents may be removed from the solution by a technique such as vacuum drying to form the final solid electrolyte. Advantageously, the methods described herein are readily scalable for commercial production of solid-state electrochemical cells.

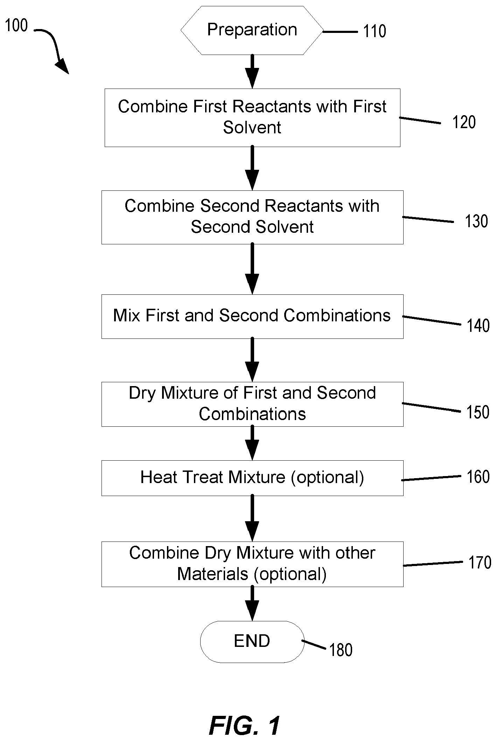

FIG. 1 is a flow chart of a process for producing a solid electrolyte composition useful for the construction of secondary electrochemical cells. Process 100 results in highly lithium-ion-conducting crystalline, glass, and glass ceramic materials useful as solid electrolytes in lithium-based solid electrochemical cells. Process 100 begins with preparation step 110 wherein any preparation action such as precursor synthesis, purification, and equipment preparation may take place. Optionally, an inert environment such as a glovebox containing argon may be used to exclude water vapor from the reaction environment.

After any initial preparation, process 100 advances to step 120 wherein selected first reactants are combined with a first solvent. First reactants may include, for example, P₂S₅, Li₂S, and other appropriate Li, P, and S sources which result in PS₄³⁻ units in a solution. It should be noted that elements B, Al, As, Sb, Bi, Si, Ge, and/or Sn may be used in place of P. Specifically, the substitution of B (or Al) may produce BS₃³⁻ (AlS₃³⁻) instead of BS₄³⁻ (AlS₄³⁻). Furthermore, the elements N, O, Se, and/or Te may be used in place of S. The first reactants are typically supplied and used in powder forms with particle sizes of 20 µm or smaller, as measured with a technique such as laser diffraction. It is also possible to use reactants made up of particles as large as 0.5mm.

First solvents may include, for example, but are not limited to hydrocarbon solvents containing one or more O, N, or S atoms. Specifically, solvents for use in step 120 may include ring (cyclic) ether molecules such as tetrahydrofuran (THF), ring ether compounds with additional groups such as 2-methyl THF, chain ether molecules such as dimethoxyethane (DME), ester molecules such as ethyl acetate, chain carbonyl containing molecules such as 2-pentanone, ring thioether compounds such as thiophene, chain nitrile molecules such as acetonitrile, and ring amine molecules such as n-methyl piperidine.

For step 120, the ratios and amounts of the various reactants are chosen to prepare the electrolyte backbone in small, readily reactive particles. In the case of a PS₄³⁻backbone, in one embodiment, approximately 1 mole of Li₂S is used for every 1 mole of P₂S₅ to achieve the desired solution. The amount of solvent added to the combination is not limited as long as the amount of solvent supports synthesis of the desired composition of solid electrolyte reactant. Furthermore, multiple solvents may be mixed together with the noted reactants.

Similarly, in step 130 selected second reactants are combined with one or more second solvents. Second reactants may include, for example, Li₂S and LiX (X = F, Cl, Br, or I). Furthermore, reactants Li₃N, Li₂O, Li₂Se, and/or Li₂Te may be used in place of Li₂S. In one embodiment, the second reactants are supplied and used in powder form with particle sizes of 20 µm or smaller, as measured with a technique such as laser diffraction. It is also possible to use reactants made up of particles as large as 0.5mm.

Second solvents may include, but are not limited to, hydrocarbon protonated solvents encompassing chain alcohols such as ethanol, protonated ring amine molecules such as pyrrolidine, and chain protonated amide molecules such as n-methyl formamide. The typical action of the second solvent upon the second reactants is to reduce the particle size or completely dissolve the reactants. The second solvent may also be used to change the orientation of the electrolyte backbone unit prepared in the first solvent and produce different crystal structures of the same chemical composition. For example, when pyrrolidine is used as the second solvent with tetrahydrofuran as the first solvent, and the reactants are Li₂S and P₂S₅, Li₃PS₄ is the primary phase observed instead of Li₇PS₆. The solvent choice may also impact the final surface area of the resultant ceramic electrolyte powder.

For step 130, the ratios and amounts of the various reactants are not specifically limited, and may be chosen to obtain the appropriate final material stoichiometry. The amount of solvent added to the combination is not limited as long as the amount of solvent supports synthesis of the desired composition of solid electrolyte reactant. Furthermore, multiple solvents may be mixed together with the noted reactants.

The two different solutions/suspensions of steps 120 and 130 utilize the differential solubility of the various reactants and solvents to prepare the required particle sizes and ion coordination environments for the subsequent formation of the solid electrolyte compound. Specifically, polar aprotic solvents can maintain the appropriate S coordination environment around B, Al, P, As, Sb, Bi, Si, Ge, or Sn ions, while protonated solvents will react with the S and displace it. Further, sulfur-based reactants are more soluble in protonated solvents than polar aprotic solvents, so placing the appropriate sulfur-based reactants in a protonated solvent provides greater control over the final stoichiometry of the product. Therefore, the independent combinations of steps 120 and 130 provide control over solvation and ion coordination environment. For example, combining first reactants Li₂S and P₂S₅ with first solvent acetonitrile produces a solution with particles <19 µm, as measured by a particle size analysis technique such as laser diffraction. This first solution can be reacted with a second solution prepared with second reactants Li₂S and LiBr, and second solvent ethanol, to form a Li₆PS₅Br argyrodite composed of PS₄³⁻ units. Conversely, if the example first and second reactants are put together into the second solvent, no electrolyte phase is formed. These examples indicate that acetonitrile is an appropriate solvent for stabilizing a PS₄³⁻ unit, while ethanol is not. Ethanol does fully dissolve all of the example reactants. Typically, reaction/stir time for each step 120 or step 130 may be between a few minutes and a few hours. Specific reaction/stirring time depend upon the details of the reactants and solvent used including parameters such as initial powder size, total volume, and total solids loading. Example processes described below indicate various reaction/stirring time.

Next, in step 140 the first and second combinations may be mixed for a predetermined period of time and temperature in order to create a solid electrolyte solution. Mixing time is not specifically limited as long as it allows for appropriate homogenization and reaction of precursors to generate the solid electrolyte. Mixing temperature is also not specifically limited as long as it allows for appropriate mixing and is not so high that a precursor enters the gaseous state. For example, appropriate mixing may be accomplished over 0.25 to 48 hours and at temperatures from 20 to 120 degrees Celsius. Mixing may be accomplished using, for example, magnetic stirring and a closed glass vessel. Typically, reaction/stirring time for step 140 may be between a few minutes and a few hours.

Next, in step 150, the mixture resulting from step 140 may be dried by spray drying in an inert atmosphere such as argon or nitrogen or by vacuum drying under vacuum for a predetermined period of time and temperature. Typically, drying time for step 140 may be between a few minutes and a few hours at a temperature range typically of ambient temperature to 215 degrees Celsius.

Optional heat treatment, during step 160 may also be performed. For some compositions, an amorphous glassy phase is desired and no further heat treatment is necessary. For other compositions, a crystalline or glass ceramic phase is preferable, and heating to temperatures between 100 and 550 degrees Celsius may be needed. The desired crystalline or glass ceramic phase may optionally be produced during step 150. The time and temperature required will vary by material and target phase.

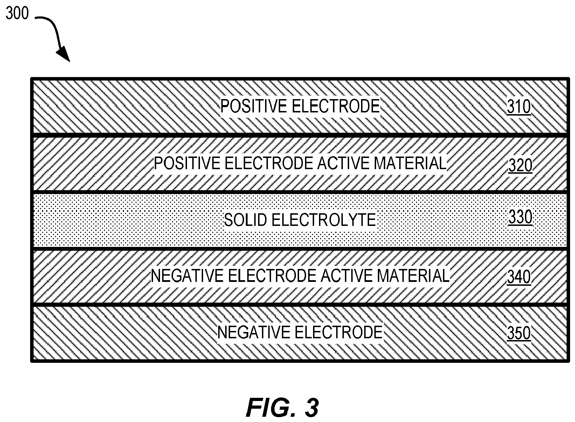

Next, in step 170, the dry mixture may be optionally combined with other materials, such as binders, required to form one or more layers of the electrochemical cell described in FIG. 3. In final step 180, a completed composition may be utilized in the construction of electrochemical cells such as the cell of FIG. 3.

The following examples express the efficacy of the described dual solution method of process 100 for the production of a desirable Li₆PS₅Cl argyrodite crystalline phase electrolyte and other electrolyte compounds as compared to other single solution and dual mixture methods of production. Although the following examples are described using Lithium-based compounds it should be understood that Sodium-based electrolyte compounds may be substituted. Furthermore, although Li₆PS₅Cl argyrodite is described herein; it should be understood that the present method may include electrolytes with other phases with and without halogen such as compounds: Li₃PS₄, Li₇P₃S₁₁, Li₇PS₆, Li₆PS₅Cl, Li₆PS₅Cl_{0.5}Br_{0.5}, Li₆PS₅I.

### Example 1 (dual solution method)

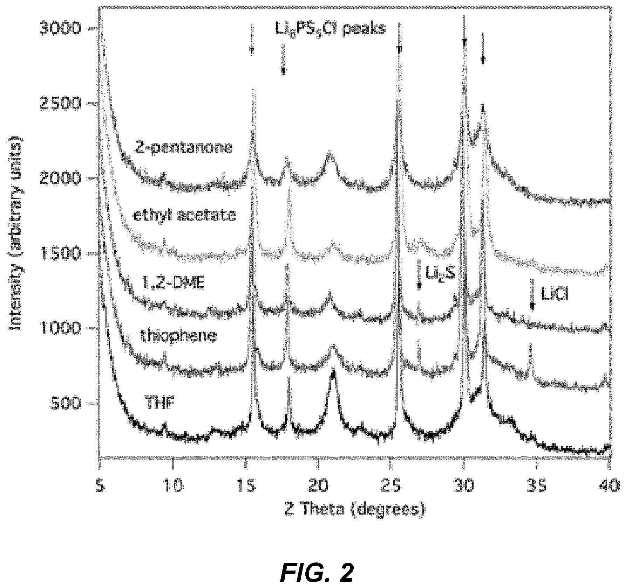

0.195 g of P₂S₅ was mixed with 0.024 g Li₂S in 5 mL tetrahydrofuran (THF) and stirred for 3 h. 0.045 g LiCl was mixed with 0.097 g Li₂S in 5 mL ethanol and stirred for 45 min. The THF and ethanol mixtures were combined and further stirred for 15 min, and then the final mixture was drop cast at 215 °C to form a ceramic powder (see Figure 2). This process was repeated with thiophene, 1,2-dimethoxyethane (1,2-DME), ethyl acetate, or 2-pentanone substituted for THF. X-ray diffraction analysis was carried out on the powders. Li₆PS₅Cl argyrodite was the primary phase observed in all of the powders.

### Example 2 (dual solution method)

1.024 g of P₂S₅ was mixed with 0.212 g Li₂S in 25 mL acetonitrile (ACN) and stirred for 30 min. 0.393 g Li₂S was added to 25 mL ethanol and stirred for 30 min. The ACN and ethanol mixtures were combined and further stirred for 15 min, and then the final mixture was drop cast at 200 °C to form a ceramic powder. X-ray diffraction analysis was carried out on the powders. β-Li₃PS₄ was the primary phase observed.

### Example 3 (dual solution method)

0.615 g of P₂S₅ was mixed with 0.127 g Li₂S in 25 mL ethyl acetate (EA) and stirred for 30 min. The Li₂S particle size was less than 20 µm. 0.223 g LiCl was mixed with 0.478 g Li₂S in 25 mL ethanol and stirred for 30 min. The EA and ethanol mixtures were combined and further stirred for 15 min, and then the final mixture was heated at 150 °C under vacuum for 3 h to form a ceramic powder. The powder was further heated at 550 °C under flowing argon for 2h. X-ray diffraction analysis was carried out on the powders. Li₆PS₅Cl argyrodite was the primary phase observed.

0.35 g of ceramic powder was compressed to a density of 1.4 g/cm³ in a 1.6 cm diameter die at ambient temperature, and the ionic conductivity was measured by using AC impedance. The ionic conductivity of the sample was 1.6 mS/cm.

### Example 4 (dual solution method)

0.615 g of P₂S₅ was mixed with 0.127 g Li₂S in 25 mL ethyl acetate (EA) and stirred for 5 h. The Li₂S particles were approximately 0.5 mm diameter. 0.223 g LiCl was mixed with 0.478 g Li₂S in 25 mL ethanol and stirred for 5 h. The EA and ethanol mixtures were combined and further stirred for 15 min, and then the final mixture was heated at 150 °C under vacuum for 1.5 h to form a ceramic powder. The powder was further heated at 550 °C under flowing argon for 2h. X-ray diffraction analysis was carried out on the powders. Li₆PS₅Cl argyrodite was the primary phase observed.

0.32 g of ceramic powder was compressed to a density of 1.5 g/cm³ in a 1.6 cm diameter die at ambient temperature, and the ionic conductivity was measured by using AC impedance. The ionic conductivity of the sample was 1.3 mS/cm.

### Example 5 (dual solution method)

0.615 g of P₂S₅ was mixed with 0.127 g Li₂S in 25 mL acetonitrile (ACN) and stirred for 30 min. 0.457 g LiBr was mixed with 0.478 g Li₂S in 25 mL ethanol and stirred for 30 min. The ACN and ethanol mixtures were combined and further stirred for 15 min, and then the final mixture was heated at 150 °C under vacuum for 1.5 h to form a ceramic powder. The powder was further heated at 550 °C under flowing argon for 2h. X-ray diffraction analysis was carried out on the powders. Li₆PS₅Br argyrodite was the primary phase observed.

0.35 g of ceramic powder was compressed to a density of 1.8 g/cm³ in a 1.6 cm diameter die at ambient temperature, and the ionic conductivity was measured by using AC impedance. The ionic conductivity of the sample was 1.1 mS/cm.

### Comparative example 1 (single solution method)

0.778 g of P₂S₅ was mixed with 0.241g Li₂S and 0.148 g LiCl in 10 mL ethanol and stirred until all solids dissolved. The mixture was dried under vacuum and then heated at 190 °C to form a ceramic powder. X-ray diffraction analysis was carried out on the powder, and LiCl was the only phase observed.

### Comparative example 2 (single solution method)

2.587 g of P₂S₅ was mixed with 1.601 g Li₂S and 0.986 g LiCl in 25 mL 1,2-dimethoxyethane and stirred for 72 h. The mixture was dried at 140 °C, then heated at 210 °C under vacuum to form a ceramic powder. X-ray diffraction analysis was carried out on the powder, and the phases Li₇P₃S₁₁, Li₂S, and LiCl were all observed.

FIG. 2 is a plot of X-ray diffraction measurements of solid electrolyte compositions produced by the process indicated in FIG. 1 according to Example 1. X-ray diffraction (XRD) measurements show dominant peaks indicative of the Li₆PS₅Cl argyrodite as the primary crystalline phase observed for all solvents used. Minor variations in the X-ray diffraction measurements were observed based upon the solvent used in the electrolyte synthesis.

FIG. 3 is a schematic sectional view of an example construction of a lithium solid-state electrochemical cell including an electrode composition of the present disclosure. Lithium solid-state battery 300 includes positive electrode (current collector) 310, positive electrode active material layer (cathode) 320, solid electrolyte layer 330, negative electrode active material layer (anode) 340, and negative electrode (current collector) 350. Solid electrolyte layer 330 may be formed between positive electrode active material layer 320 and negative electrode active material layer 340. Positive electrode 310 electrically contacts positive electrode active material layer 320, and negative electrode 350 electrically contacts negative electrode active material layer 340. The solid electrolyte compositions described herein may form portions of positive electrode active material layer 320, negative electrode active material layer 340 and solid electrolyte layer 330.

Positive electrode 310 may be formed from materials including, but not limited to, aluminum, nickel, titanium, stainless steel, or carbon. Similarly, negative electrode 350 may be formed from copper, nickel, stainless steel, or carbon. Positive electrode active material layer 320 may include, at least, a positive electrode active material including, but not limited to, metal oxides, metal phosphates, metal sulfides, sulfur, lithium sulfide, oxygen, or air, and may further include a solid electrolyte material such as the solid electrolyte compositions described herein, a conductive material and/or a binder. Examples of the conductive material include , but are not limited to, carbon (carbon black, graphite, carbon nanotubes, carbon fiber, graphene), metal particles, filaments, or other structures. Examples of the binder include, but are not limited to, polyvinyl chloride (PVC) polyanilene, poly(methyl methacrylate) ("PMMA"), nitrile butadiene rubber ("NBR"), styrene-butadiene rubber (SBR), PVDF, or polystyrene. Positive electrode active material layer 320 may include solid electrolyte compositions as described herein at, for example, 5% by volume to 80% by volume. The thickness of positive electrode active material layer 320 may be in the range of, for example, 1 µm to 1000 µm.

Negative electrode active material layer 340 may include, at least, a negative electrode active material including, but not limited to, lithium metal, lithium alloys, Si, Sn, graphitic carbon, hard carbon, and may further include a solid electrolyte material such as the solid electrolyte compositions described herein, a conductive material and/or a binder. Examples of the conductive material may include those materials used in the positive electrode material layer. Examples of the binder may include those materials used in the positive electrode material layer. Negative electrode active material layer 340 may include solid electrolyte compositions as described herein at, for example, 5% by volume to 80% by volume. The thickness of negative electrode active material layer 340 may be in the range of, for example, 1 µm to 1000 µm.

Solid electrolyte material included within solid electrolyte layer 330 may be solid electrolyte compositions as described herein. Solid electrolyte layer 330 may include solid electrolyte compositions as described herein in the range of 10% by volume to 100% by volume, for example. Further, solid electrolyte layer 330 may contain a binder or other modifiers. Examples of the binder may include those materials used in the positive electrode material layer as well as additional self-healing polymers and poly(ethylene) oxide (PEO). A thickness of solid electrolyte layer 330 may be in the range of 1 µm to 1000 µm.

Although indicated in FIG. 3 as a lamellar structure, it is well known that other shapes and configurations of solid-state electrochemical cells are possible. Generally, a lithium solid-state battery may be produced by providing a positive electrode active material layer, a solid electrolyte layer, and a negative electrode active material layer sequentially layered and pressed between electrodes and provided with a housing.

Features described above as well as those claimed below may be combined in various ways without departing from the scope hereof. The previous examples illustrate some possible, non-limiting combinations. It should thus be noted that the matter contained in the above description or shown in the accompanying drawings should be interpreted as illustrative and not in a limiting sense. The above-described embodiments should be considered as examples of the present invention, rather than as limiting the scope of the various inventions. In addition to the foregoing embodiments of inventions, review of the detailed description and accompanying drawings will show that there are other embodiments of such inventions. Accordingly, many combinations, permutations, variations and modifications of the foregoing embodiments of inventions not set forth explicitly herein will nevertheless fall within the scope of such inventions. The following claims are intended to cover generic and specific features described herein, as well as all statements of the scope of the present method and system, which, as a matter of language, might be said to fall there between.

The present invention as well as aspects and embodiments thereof may be summarized using numbered Clauses which are indicated below.

According to Clause 1, there is proposed a method for producing a sulfide solid electrolyte material comprising the steps of: combining an alkali metal salt and a sulfide compound containing at least one of P, B, Al, As, Sb, Bi, Si, Ge, and Sn with a polar aprotic solvent to form a first solution; combining an alkali metal salt and a polar protonated solvent to form a second solution; combining the first and second solutions to form a third solution; and drying the third solution to produce a sulfide solid electrolyte material.

According to Clause 2, there is proposed method as recited in Clause 1, further comprising combining an alkali metal halide with the alkali metal salt and the polar protonated solvent.

According to Clause 3, there is provided a method as recited in Clause 1, wherein the alkali metal salt is selected from the group consisting of Li₂S and Li₃N.

According to Clause 4, there is provided a method as recited in Clause 1 wherein the alkali metal salt is Li₂S with a particle size of 20 µm or smaller.

According to Clause 5, there is provided a method as recited in Clause 1 wherein the first solution has a molar ratio of Li₂S:P₂S₅ between 9:11 and 11:9.

According to Clause 6, there is provided a method as recited in Clause 1 further comprising the step of heating the sulfide solid electrolyte material to a temperature higher than the drying temperature to increase the ionic conductivity of the sulfide solid electrolyte material.

According to Clause 7, there is provided a method as recited in Clause 1 wherein the sulfide solid electrolyte material comprises a lithium argyrodite phase.

According to Clause 8, there is provided a method as recited in Clause 1 further comprising the step of stirring each of the first, second and third solutions for a period ranging between 15 minutes and 12 hours.

According to Clause 9, there is provided a method for producing a sulfide solid electrolyte material comprising the steps of: combining an alkali metal salt and a sulfide compound containing at least one of P, B, Al, As, Sb, Bi, Si, Ge, and Sn with a polar aprotic solvent to form a first solution; combining an alkali metal salt and ethanol to form a second solution; combining the first and second solutions to form a third solution; and drying the third solution to produce a sulfide solid electrolyte material.

According to Clause 10, there is provided a method as recited in Clause 9 further comprising combining an alkali metal halide with the alkali metal salt and the ethanol.

According to Clause 11, there is provided a method as recited in Clause 9 wherein the alkali metal salt is selected from the group consisting of Li₂S and Li₃N.

According to Clause 12, there is provided a method as recited in Clause 9 wherein the alkali metal salt is Li₂S with a particle size of 20 µm or smaller.

According to Clause 13, there is provided a method as recited in Clause 9 wherein the first solution has a molar ratio of Li₂S:P₂S₅ between 9:11 and 11:9.

According to Clause 14, there is provided a method as recited in Clause 9 wherein the sulfide solid electrolyte material comprises a lithium argyrodite phase.

According to Clause 15, there is provided a method as recited in Clause 9 further including the step of stirring each of the first, second and third solutions for a period ranging between 15 minutes and 12 hours.

According to Clause 16, there is provided a method for producing a sulfide solid electrolyte material comprising the steps of combining an alkali metal salt and a sulfide compound containing at least one of P, B, Al, As, Sb, Bi, Si, Ge, and Sn with a Nitrogen-bearing polar aprotic solvent to form a first solution; combining an alkali metal salt and ethanol to form a second solution; combining the first and second solutions to form a third solution; and drying the third solution to produce a sulfide solid electrolyte material.

According to Clause 17, there is provided a method as recited in Clause 16 further comprising combining an alkali metal halide with the alkali metal salt and the ethanol.

According to Clause 18, there is provided a method as recited in Clause 16 wherein the Nitrogen-bearing polar aprotic solvent is acetonitrile, propionitrile, isobutyronitrile, malonitrile, fumaronitrile, or a combination thereof.

According to Clause 19, there is provided a method as recited in Clause 16 wherein the alkali metal salt is selected from the group consisting of Li₂S and Li₃N.

According to Clause 20, there is provided a method as recited in Clause 16 wherein the alkali metal salt is Li₂S with a particle size of 20 µm or smaller.

According to Clause 21, there is provided a method as recited in Clause 16 wherein the first solution has a molar ratio of Li₂S:P₂S₅ between 9:11 and 11:9.

According to Clause 22, there is provided a method as recited in Clause 16 wherein the sulfide solid electrolyte material comprises a lithium argyrodite phase.

According to Clause 23, there is provided a method as recited in Clause 16 further comprising the step of stirring each of the first, second and third solutions for a period ranging between 15 minutes and 12 hours.

## Claims

1. A method for producing a sulfide solid electrolyte material comprising the steps of:
combining an alkali metal salt and a sulfide compound containing at least one of P, B, Al, As, Sb, Bi, Si, Ge, and Sn with a Nitrogen-bearing polar aprotic solvent to form a first solution;
combining an alkali metal salt and ethanol to form a second solution;
combining the first and second solutions to form a third solution; and
drying the third solution to produce a sulfide solid electrolyte material.

2. The method according to claim 1 further comprising combining an alkali metal halide with the alkali metal salt and the ethanol.

3. The method according to claim 1 or 2, wherein the Nitrogen-bearing polar aprotic solvent is acetonitrile, propionitrile, isobutyronitrile, malonitrile, fumaronitrile, or a combination thereof.

4. The method according to any one of the preceding claims wherein the alkali metal salt is selected from the group consisting of Li₂S and Li₃N.

5. The method according to any one of the preceding claims wherein the alkali metal salt is Li₂S with a particle size of 20 µm or smaller.

6. The method according to any one of the preceding claims wherein the first solution has a molar ratio of Li₂S:P₂S₅ between 9:11 and 11:9.

7. The method according to any one of the preceding claims wherein the sulfide solid electrolyte material comprises a lithium argyrodite phase.

8. The method according to any one of the preceding claims further comprising the step of stirring each of the first, second and third solutions for a period ranging between 15 minutes and 12 hours.
